# EUROPEAN PATENT APPLICATION

(11) **EP 1 746 331 A1**
(43) Date of publication of application: **24.01.2007**
(21) Application number: 05254471.5
(22) Date of filing: 18.07.2005
(51) Int. Cl.: F16M 11/10

(54) **Support device for a display**

(71) Applicant: Wang, Max, Tai-Ping City, Taichung Hsien (TW)
(72) Inventor: Wang, Max, Tai-Ping City, Taichung Hsien (TW)
(74) Representative: Jenkins, Peter David

(57) **Abstract**

A support device includes a post (3), a shaft (4), a seat (5) and a driving member (6). The post (3) has a top end that is formed with a through-hole (321) extending in an axial direction. The shaft (4) is mounted rotatably on the top end of the post (3), and extends in the axial direction through the through-hole (321) in the top end of the post (3). The seat (5) is mounted securely on the shaft (4) so as to co-rotate with the shaft (4), and is adapted to support an object thereon. The driving member (6) is mounted movably on the post (3), engages the shaft (4), and is operable so as to drive the shaft (4) together with the seat (5) to rotate to a desired angular position relative to the post (3).

## Description

The invention relates to a support device, more particularly to a support device adjustable so as to enable a display or a notebook computer to be positioned at a desired angle.

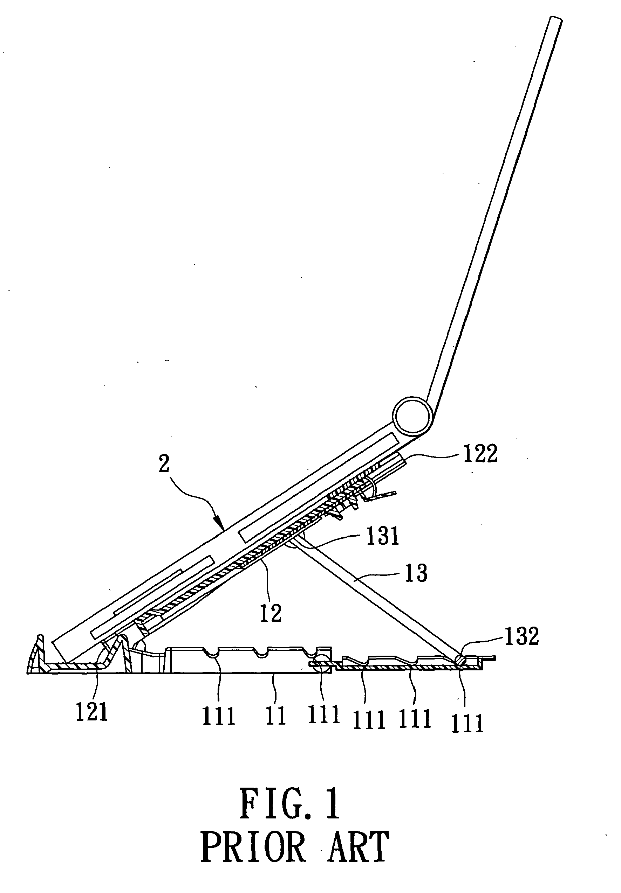

Referring to Figure 1, a support device for a notebook computer 2 includes a base 11, a tray 12, and a support member 13. The base 11 has a top side having opposite front and rear edges, and formed with a plurality of positioning grooves 111 aligned with each other from the front edge to the rear edge. The tray 12 has a bottom side, a pivot end 121 pivotably connected to the base 11, and a distal end 122 opposite to the pivot end 121. The support member 13 includes an engaging end 131 pivotably connected to the bottom side of the tray 12, and an opposite positioning end 132 for engaging selectively one of the positioning grooves 111 so as to position the notebook computer 2 at a desired angle for use or for display.

Although the aforesaid support device is able to support the notebook computer 2 at different angles, in practice, there are still some drawbacks that have to be resolved. In particular, since the angle of the computer 2 to be positioned is determined by the position of the positioning grooves 111, variation of the angle of the computer relative to the base 11 is limited by the number of the positioning grooves 111. Moreover, when the number of the positioning grooves 111 is increased, the shape of the base 11 becomes larger and more complicated accordingly.

Therefore, the object of this invention is to provide a support device that can overcome the aforesaid drawbacks associated with the prior art.

Accordingly, a support device of the present invention includes a post, a shaft, a seat and a driving member.

The post has a top end that is formed with a through-hole extending in an axial direction.

The shaft is mounted rotatably on the top end of the post, extends in the axial direction through the through-hole in the top end of the post, and defines a rotation axis.

The seat is mounted securely on the shaft so as to co-rotate with the shaft, and is adapted to support an object thereon.

The driving member is mounted movably on the post, engages the shaft, and is operable so as to drive the shaft together with the seat to rotate about the rotation axis to a desired angular position relative to the post.

Other features and advantages of the present inventionwill become apparent in the following detailed description of the preferred embodiment with reference to the accompanying drawings, of which:
Fig. 1 is a side view of a conventional support device for a notebook computer;
Fig. 2 is an exploded perspective view of the preferred embodiment of a support device for a notebook computer according to the present invention;
Fig. 3 is an assembled perspective view of the preferred embodiment;
Fig. 4 is a sectional side view of a seat of the preferred embodiment in an inclined state with a notebook computer supported thereon; and
Fig. 5 is a sectional side view of the seat of the preferred embodiment in a horizontal state with the notebook computer supported thereon.

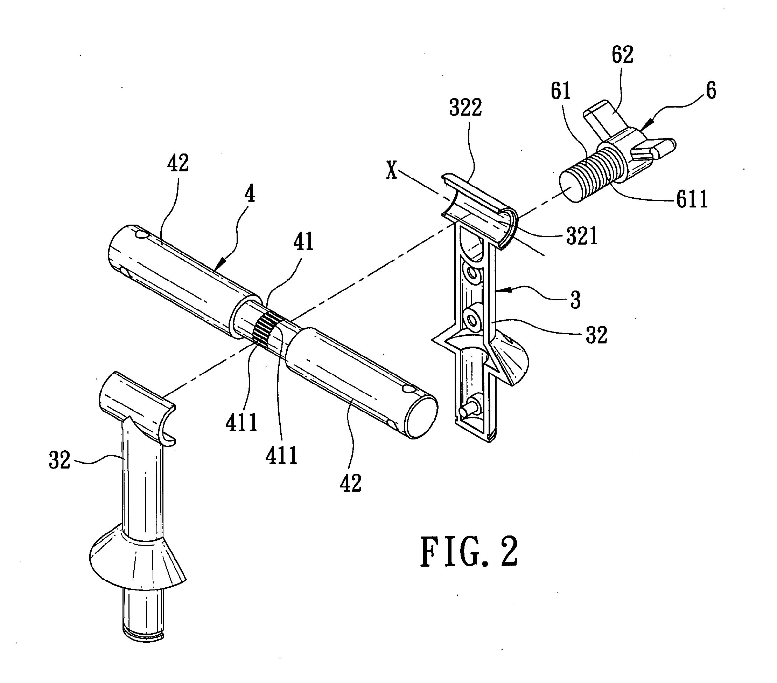

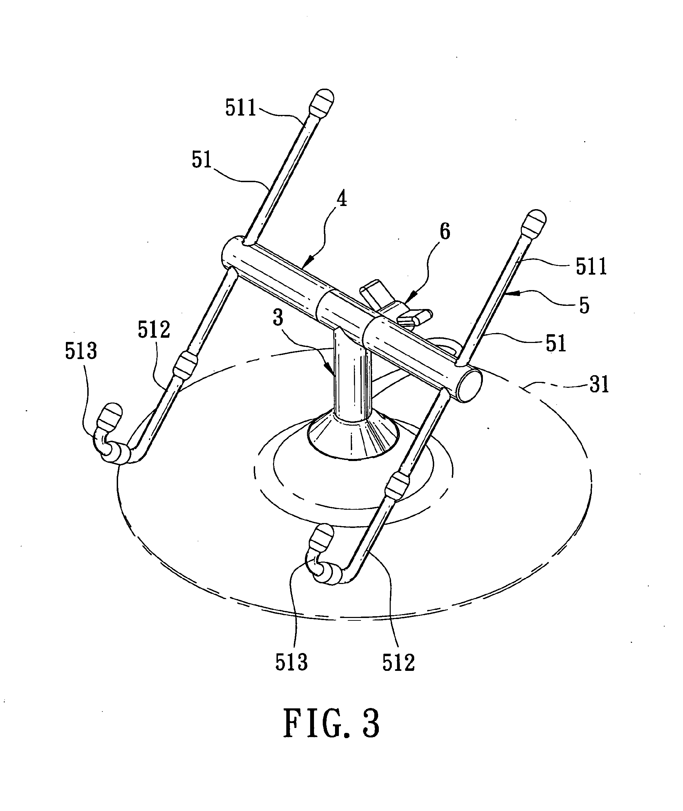

As shown in Figures 2 and 3, the preferred embodiment of a support device for a display or a notebook computer according to the present invention includes a post 3, a shaft 4, a seat 5 and a driving member 6.

The post 3 has a base 31 and a pair of post halves 32 that are coupled to each other to form a post body of the post 3. The post 3 further has a top end that is formed with a sleeve 322 that defines a through-hole 321 extending in an axial direction (X).

The shaft 4 is mounted rotatably on the top end of the post 3, extends in the axial direction (X) through the through-hole 321 in the top end of the post 3, and defines a rotation axis. The shaft 4 has two opposite end portions 42 and a middle portion 41 that is disposed between the end portions 42, that is formed with a first thread 411, and that is in the form of a worm wheel.

The seat 5 is mounted securely on the shaft 4 so as to co-rotate with the shaft 4, and is adapted to support an object, such as a display or a notebook computer, thereon. The seat 5 includes a pair of rod members 51 that are respectively mounted on the end portions 42 of the shaft 4 and that extend in a transverse direction relative to the shaft 4. Each of the rod members 51 has a straight upper end 511, a straight lower section 512 that is opposite to the straight upper end 511, and a lower hook end 513 that extends from the straight lower section 512.

The driving member 6 is mounted movably on the post 3, engages the shaft 4, and is operable so as to drive the shaft 4 together with the seat 5 to rotate about the rotation axis to a desired angular position relative to the post 3. In this embodiment, the driving member 6 includes a screw rod 61 that is in the form of a worm, that extends into the post 3, and that has a second thread 611 which engages threadedly the first thread 411 of the middle portion 41 of the shaft 4 such that rotation of the screw rod 61 results in rotation of the shaft 4. A knob 62 is connected to the screw rod 61, and is disposed outwardly of the post 3 for operating the screw rod 61.

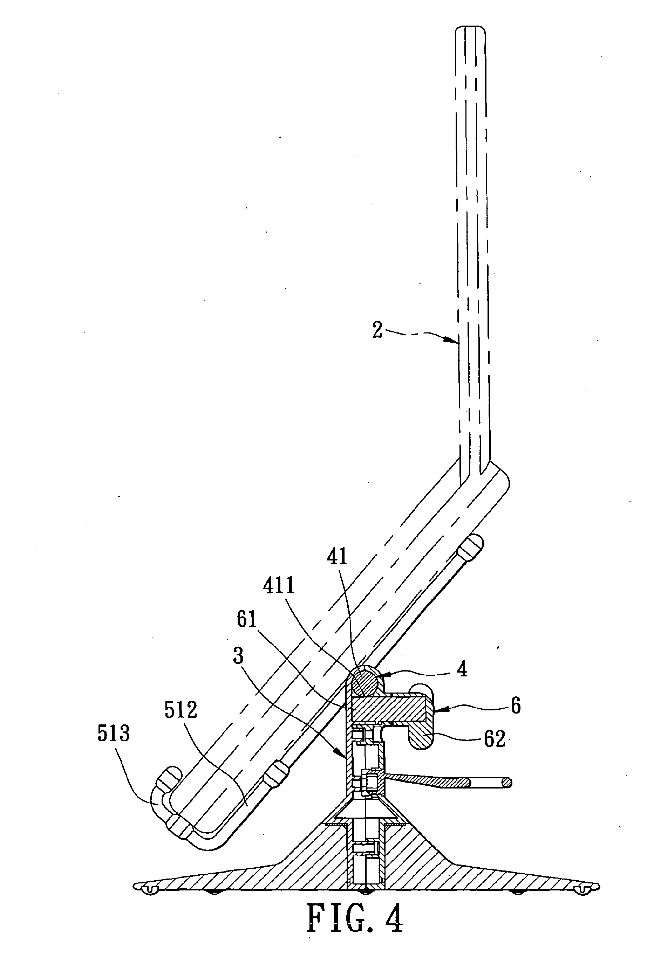

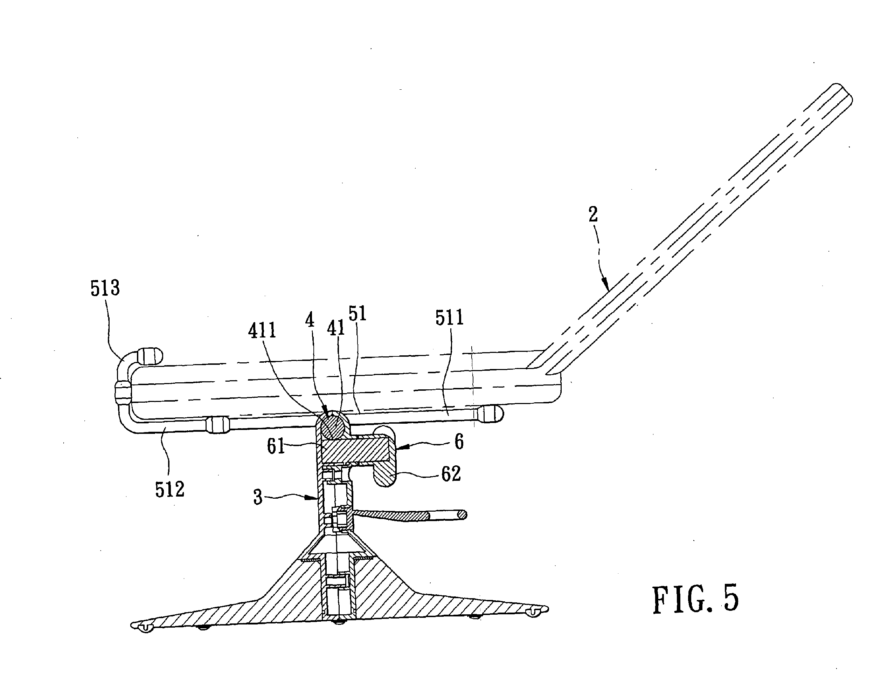

Referring to Figures 4 and 5, in use, the notebook computer 2 is seated on the straight upper end 511 and the lower section 512 of the rod members 51, and has an end portion received in the lower hook ends 513. When the knob 62 of the driving member 62 is rotated clockwise or counterclockwise, the shaft 4 together with the seat 5 can be rotated about the rotation axis to a desired angular position. In this manner, the notebook computer 2 can be positioned to any desired angle during use.

In sum, the support device of this invention has the advantages of smaller size and convenience in position adjustment as compared to the prior art.

## Claims

1. A support device comprising:
a post (3) having a top end that is formed with a through-hole (321) extending in an axial direction (X) ;
a shaft (4) mounted rotatably on said top end of said post (3), extending in said axial direction (X) through said through-hole (321) in said top end of said post (3), and defining a rotation axis;
a seat (5) mounted securely on said shaft (4) so as to co-rotate with said shaft (4) and adapted to support an object thereon; and
a driving member (6) mounted movably on said post (3), engaging said shaft (4), and operable so as to drive said shaft (4) together with said seat (5) to rotate about said rotation axis to a desired angular position relative to said post (3).

2. The support device of claim 1, wherein said shaft (4) has two opposite end portions (42) and a middle portion (41) that is disposed between said end portions (42) and that is formed with a first thread (411), said drivingmember (6) including a screw rod (61) that extends into said post (3) and that has a second thread (611) which engages threadedly said first thread (411) of said middle portion (41) of said shaft (4) such that rotation of said screw rod (61) results in rotation of said shaft (4).

3. The support device of claim 2, wherein said seat (5) includes a pair of rod members (51) that are respectively mounted on said end portions (42) of said shaft (4) and that extend in a transverse direction relative to said shaft (4).

4. The support device of claim 3, wherein each of said rod members (51) has a straight upper end (511) and a lower hook end (513) that is opposite to said straight upper end (511) and that is adapted to support the obj ect thereon.
